# EUROPÄISCHE PATENTSCHRIFT

(11) **EP 1 682 789 B1**
(45) Veröffentlichungstag und Bekanntmachung des Hinweises auf die Patenterteilung: **06.01.2010**
(21) Anmeldenummer: 04818768.6
(22) Anmeldetag: 10.11.2004
(51) Int. Cl.: F16D 33/02

(54) **HYDRODYNAMISCHE KUPPLUNG UND VERFAHREN ZUR BEEINFLUSSUNG DES VON DER HYDRODYNAMISCHEN KUPPLUNG AUFNEHMBAREN MOMENTES**
HYDRODYNAMIC CLUTCH AND METHOD FOR INFLUENCING THE TORQUE THAT CAN BE PICKED UP BY THE HYDRODYNAMIC CLUTCH
EMBRAYAGE HYDRODYNAMIQUE ET PROCEDE POUR INFLUENCER LE COUPLE ABSORBE PAR L'EMBRAYAGE HYDRODYNAMIQUE

(30) Priorität: 14.11.2003 DE 10353517
(43) Veröffentlichungstag der Anmeldung: 26.07.2006
(73) Patentinhaber: Voith Turbo GmbH & Co. KG, 89522 Heidenheim (DE)
(72) Erfinder: MENNE, Achim, 74564 Crailsheim (DE); HOELLER, Heinz, 74564 Crailsheim (DE)
(74) Vertreter: Schmidt, Sven Hendrik
(86) Internationale Anmeldenummer: PCT/EP2004/012701
(87) Internationale Veröffentlichungsnummer: WO 2005/050047

(56) Entgegenhaltungen:
- DE-B- 1 196 438
- GB-A- 988 962
- US-A- 2 683 350
- US-A- 2 851 858

## Beschreibung

Die Erfindung betrifft eine hydrodynamische Kupplung, im einzelnen mit den Merkmalen aus dem Oberbegriff von Anspruchs 1, deren maximal aufnehmbares Moment beeinflussbar ist.

Hydrodynamische Kupplungen in Anfahreinheiten für Fahrzeuge sind in einer Vielzahl von Ausführungen aus dem Stand der Technik bekannt. Die Anfahreinheit umfasst dabei einen mit einem Antrieb koppelbaren Eingang und einen mit einem Abtrieb koppelbaren Ausgang. Zwischen dem Eingang und dem Ausgang ist die hydrodynamische Kupplung, umfassend ein Primärschaufelrad und ein Sekundärschaufelrad, die miteinander einen torusförmigen Arbeitsraum bilden, angeordnet. Dem Primärschaufelrad ist dabei beispielsweise eine sogenannte Primärradschale zugeordnet, welche drehfest mit diesem verbunden ist und das Sekundärschaufelrad in axialer Richtung und vollständig in Umfangsrichtung umschließt. Die Anfahreinheit umfasst des Weiteren eine schaltbare Kupplung in Form einer Überbrückungskupplung, welche parallel zur hydrodynamischen Komponente, insbesondere Kupplung angeordnet ist und mit dieser gemeinsam oder für sich allein schaltbar ist. Dies bedeutet, dass über die beiden Kupplungen zwei Leistungszweige erzeugt werden, wobei der Leistungsfluss entweder allein über jeweils eine der Kupplungen oder aber gemeinsam über beide erfolgt. Die schaltbare Kupplung umfasst dabei wenigstens ein Kupplungseingangselement und ein Kupplungsausgangselement, wobei das Kupplungsausgangselement wenigstens mittelbar drehfest mit dem Sekundärschaufelrad gekoppelt ist. Das Kupplungseingangselement ist wenigstens mittelbar drehfest mit dem Primärrad bzw. dem Eingang verbunden. Die Mittel zur Erzeugung eines Reibschlusses zwischen den einzelnen Kupplungselementen umfassen dabei ein mit Druckmittel beaufschlagbares Kolbenelement. Dieses kann separat den Kupplungsscheiben zugeordnet sein oder aber in einer besonders kompakten Ausführungsform direkt vom Sekundärschaufelrad gebildet werden. Der hydrodynamischen Kupplung ist ferner ein Betriebsmittelversorgungssystem zugeordnet. Die Kupplung kann dabei zentrifugal und zentripetal durchströmt werden. Bei zentripetaler Durchströmung wird das Betriebsmittel über den Betriebsmittelzufuhrkanal entlang des Außenumfanges des Sekundärschaufelrades geführt und in radialer Richtung im Bereich des Außendurchmessers des torusförmigen Arbeitsraumes in diesen eingebracht. Dabei wird die durch das Betriebsmittel erzeugte Kraft genutzt, um die schaltbare Kupplung im gelösten Zustand zu halten bzw. zumindest mit einem Schlupf bestimmten Betrages zu betreiben. Der Austritt aus dem torusförmigen Arbeitsraum erfolgt dabei im Bereich des radial inneren Durchmessers des Arbeitsraumes in einen darunter liegenden Raum, welcher auch als zweiter Betriebsmittelführungskanal oder -raum bezeichnet wird. Beide, der durch den Innenumfang des Gehäuses und den Außenumfang des Sekundärschaufelrades begrenzte erste Betriebsmittelführungskanal und/oder -raum sowie der zweite Betriebsmittelzufuhrkanal und/oder -raum können dabei hinsichtlich ihrer Funktion vertauscht werden. Dies ist insbesondere bei Umschaltung von zentripetaler auf zentrifugale Durchströmung erforderlich. Die Zufuhr des Betriebsmittels zur hydrodynamischen Kupplung erfolgt über den zweiten Betriebsmittelführungskanal und/oder -raum in einen Bereich des radial inneren Durchmessers des Arbeitsraumes, wobei der Austritt im Bereich des radial äußeren Durchmessers des Arbeitsraumes an einem der Schaufelräder oder zwischen beiden erfolgt. Die schaltbare Kupplung ist dann betätigt. Bei derartigen Anfahreinheiten können somit die Leistungsanteile über die einzelnen Kupplungen - schaltbare Kupplung oder hydrodynamische Kupplung - variiert werden. Dabei ist es insbesondere während des Betriebes der hydrodynamischen Kupplung zur Vermeidung einer negativen Rückwirkung auf die Drehzahl der Antriebsmaschine während des Anfahrvorganges wünschenswert, das durch die hydrodynamische Kupplung aufnehmbare Moment, welches dem vom Primärschaufelrad aufnehmbaren Moment entspricht, möglichst gering zu halten. Dies wird durch Einstellung eines minimalen Füllungsgrades versucht. Es hat sich jedoch gezeigt, dass diese Maßnahme allein nicht ausreichend ist, da gerade im Bereich sehr hohen Kupplungsschlupfes von beispielsweise 70 bis 100 Prozent noch zu hohe Momente durch die Kupplung aufgenommen werden. Dadurch kann es zu einer unerwünschten Rückwirkung in Form einer Drückung der Drehzahl der mit der hydrodynamischen Kupplung gekoppelten Antriebsmaschine kommen, so dass hier die gewünschte Fahrdynamik nicht mehr gegeben ist.

Zum Stand der Technik wird auf die folgenden Dokumente verwiesen:
DE 1 196 438 B
US 2 851 858 A
US 2 683 350 A.

Die aus dem erstgenannten Dokument bekannten Merkmale sind im Oberbegriff von Anspruch 1 zusammengefasst.

Der Erfindung lag daher die Aufgabe zugrunde, eine hydrodynamische Kupplung der eingangs genannten Art für den Einsatz von Anfahreinheiten zu schaffen, bei welcher mit geringstem konstruktiven und steuerungstechnischen Aufwand eine Minimierung des Leerlaufmomentes, d. h. insbesondere des durch die hydrodynamische Kupplung bei maximalem Schlupf aufnehmbaren Momentes im Anlaufbereich bzw. Anfahrbereich erzielbar ist.

Die erfindungsgemäße Lösung wird durch die Merkmale des Anspruchs 1 charakterisiert. Vorteilhafte Ausgestaltungen sind in den Unteransprüchen wiedergegeben.

Erfindungsgemäß werden bei einer hydrodynamischen Kupplung, umfassend mindestens ein Primärschaufelrad und ein Sekundärschaufelrad, Mittel zur Beeinflussung des Übertragungsverhaltens, insbesondere Mittel zur Beeinflussung des Strömungskreislaufes im Arbeitsraum, vorgesehen, die wenigstens ein einen Stör- bzw. Drosselbereich bildendes Element, insbesondere Drosselscheibe umfassen, die sich wenigstens teilweise in den Arbeitsraum hinein erstreckt und die erfindungsgemäß in axialer Richtung, d. h. parallel zur Rotationsachse der hydrodynamischen Kupplung im Arbeitsraum verschiebbar ist. Unter Stör- bzw. Drosselbereich wird dabei ein den Strömungskreislauf von seinem theoretischen Verlauf bzw. Richtung im Querschnitt betrachtet wenigstens über einen Teilbereich in Umfangsrichtung kurzzeitig ablenkender Bereich verstanden. Die Ablenkung d. h. Richtungsänderung erfolgt dabei in Richtung des mittleren Durchmessers des Arbeitsraumes bzw. zum Kernraum hin. Der zur Verfügung stehende Strömungsquerschnitt verjüngt sich in dem durch den Drosselbereich charakterisierten Bereich. Der Stör- bzw. Drosselbereich ist dabei derart ausgestaltet, dass dieser durch wenigstens eine Störfläche charakterisiert ist, die senkrecht oder in einem Winkel zum Strömungsverlauf des Strömungskreislaufes im Arbeitskreislauf in diesem Bereich ausgebildet ist und sich über wenigstens einen Teilbereich des Arbeitsraumes, vorzugsweise vollständig in Umfangsrichtung erstreckt.

Das den Stör- oder Drosselbereich bildende Element ist vorzugsweise ringscheibenförmig ausgestaltet, wobei der Querschnitt beliebig ausgestaltet werden kann. Die Drosselwirkung erfolgt dabei in Umfangsrichtung über den gesamten Umfang im Arbeitsraum. Denkbar sind auch Ausführungen des eine Stör- oder Drosselbereich bildenden Elementes in Form eines teilringförmigen Elementes oder Segmentes.

Die erfindungsgemäße Lösung ermöglicht eine frei variierbare Beeinflussung des Übertragungsverhaltens der hydrodynamischen Kupplung in Abhängigkeit der frei gewählten Stellung eines einen Stör -oder Drosselbereich bildenden Elementes, insbesondere der Drosselscheibe im Arbeitsraum während jeder Betriebsphase und damit deren Wirkung auf den sich im Arbeitsraum einstellenden Strömungskreislauf. Je nach Position des den Stör- oder Drosselbereich bildenden Elementes, insbesondere der Drosselscheibe und Anordnung der durch diese gebildeten Stör- bzw. Drosselbereiche im Arbeitsraum bei einem bestimmten Schlupf, der Größe des vorgesehenen Verschiebeweges sowie der Verschiebegeschwindigkeit über einen Schtupfbereich kann das Übertragungsverhalten der hydrodynamischen Kupplung gezielt durch Änderung der Position des den Stör- oder Drosselbereich bildenden Elementes beeinflusst werden. In der Ausgangsposition, d. h. im Stillstand, befindet sich dabei das den Stör- oder Drosselbereich bildende Element, insbesondere die Drosselscheibe im Bereich der Trennebene zwischen den beiden Schaufelrädern. Bei Verringerung des Schlupfes erfolgt eine Verschiebung über die axiale Erstreckung des jeweiligen Schaufelrades in axialer Richtung vom Mittelpunkt bzw. Kernraum des Arbeitsraumes weg. Damit kann der Einfluss der Drosselscheibe, insbesondere der durch diese auf den Strömungskreislauf wirkenden Stör- bzw. Wirkfläche über den Gesamtbetriebsbereich der hydrodynamischen Kupplung gezielt eingestellt werden, vorzugsweise über den gesamten Schlupfbereich. Damit ist es möglich, das Übertragungsverhalten der hydrodynamischen Kupplung auch über einen breiteren Bereich bis zum gesamten Arbeitsbereich zu beeinflussen. Diese Beeinflussung wird wenigstens als Funktion der axialen Position der Drosselscheibe und der geometrischen Abmessungen der Drosselscheibe charakterisiert. Die Änderung der Wirkung der Drosselscheibe erfolgt dann in Abhängigkeit der Änderung der Position der Drosselscheibe in axialer Richtung über dem Schlupf.

Um die gewünschten Kennliniencharakteristiken zu erhalten, bilden die Mittel zur Beeinflussung des Strömungskreislaufes entweder wenigstens einen äußeren oder inneren Stör- bzw. Drosselbereich im Arbeitsraum. Dieser ist dabei vorzugsweise einem der beiden Schaufelräder zugeordnet. Je nach Ausgestaltung und Ausführung ist die Drosselscheibe derart ausgeführt, dass diese entweder eine Außendrossel oder eine Innendrossel gegenüber dem Arbeitsraum bildet. Bei Ausgestaltung als Außendrossel ist das den Stör- oder Drosselbereich bildende Element, insbesondere die Drosselscheibe im Bereich der radial äußeren Abmessungen des Arbeitsraumes angeordnet, während bei Ausführung als Innendrossel das einen Stör- oder Drosselbereich bildende Element, insbesondere die Drosselscheibe sich vom inneren Durchmesser des Arbeitsraumes in diesen in radialer Richtung hinein erstreckt. Vorzugsweise wird jedoch eine Anordnung gewählt, die im Bereich des Innendurchmessers des Arbeitsraumes liegt, wobei in diesem Fall eine besonders kompakte Ausführung der hydrodynamischen Kupplung mit zugehöriger Stelleinrichtung für das den Stör- bzw. Drosselbereich bildende Element, insbesondere die Drosselscheibe realisiert werden kann.

Das den Stör- oder Drosselbereich bildende Element, insbesondere die Drosselscheibe ist vorzugsweise jeweils einem der Schaufelräder zugeordnet. Dabei kann die Zuordnung sowohl zum Primärschaufelrad als auch zum Sekundärschaufelrad erfolgen. Die Wirkung ist je nach Anordnung die gleiche. Die Verschiebung erfolgt dabei vom Bereich der Trennebene oder einem an diesen angrenzenden Bereich über wenigstens einen Teil, vorzugsweise die gesamte axiale Erstreckung des vom jeweiligen Schaufelrad gebildeten Teiles des Arbeitsraumes. D. h. die Verschiebung erfolgt in axialer Richtung vom geometrischen Mittelpunkt des Arbeitsraumes bzw. vom Kernraum weg.

Das den Stör-oder Drosselbereich bildende Element, insbesondere die Drosselscheibe kann dabei als separates Bauelement ausgebildet sein oder aber eine bauliche Einheit mit einem Teil dieses Schaufelrades bilden, d. h. als einteiliges Bauelement als Bestandteil eines der Schaufelräder ausgebildet werden. Im erstgenannten Fall kann die Drosselscheibe entweder
a) am jeweiligen Schaufelrad oder
b) einem drehfest mit diesem verbundenen Element oder
c) einem ortsfesten Bauelement oder Gehäuse oder
d) einem mit Relativdrehzahl zum Schaufelrad, dem die Drosselscheibe zugeordnet wird, rotierenden Element geführt werden.

Im Fall a) ist das den Stör- oder Drosselbereich bildende Element, insbesondere die Drosselscheibe je nach Ausführung als Außendrossel oder Innendrossel im Bereich des Innendurchmessers oder im Bereich ihres Außendurchmessers mit Schlitzen versehen, wobei die Schlitze sich in axialer Richtung - bei schräger Beschaufelung wenigstens mit einer Richtungskomponente in Umfangsrichtung - erstrecken und der Aufnahme der zur Führung genutzten Schaufeln der Beschaufelung dienen. Die Führung der Drosselscheibe erfolgt dann an der Beschaufelung, wobei die Beschaufelung im Führungsbereich frei von einer Anlenkung am schaufeltragenden Teil ist. Dies bedeutet, dass in diesem Bereich der Arbeitsraum nicht von der Innenkontur des schaufeltragenden Teiles begrenzt wird, sondern die Schaufeln in radialer Richtung frei überstehen. Die Führungsschlitze sind dabei an die Beschaufelung anzupassen, wobei die Schlitze je nach Ausführung der Beschaufelung als Gerad- oder Schrägbeschaufelung ausgeführt sind.
Bei der Führung der Drosselscheibe am jeweiligen Schaufelrad ist immer eine gleiche Drehzahl zwischen dem die Drosselscheibe abstützenden Element und dem jeweiligen Schaufelrad zu gewährleisten. Grundsätzlich bestehen für die Ausführung der Führungsschlitze und die axiale Bewegbarkeit der Drosselscheibe bei Schrägbeschaufelung folgende Möglichkeiten:
a) Die Drosselscheibe bzw. das den Stör- oder Drosselbereich bildende Element wird zu Änderung der Position in axialer Richtung in Umfangsrichtung entlang der schräg ausgerichteten Beschaufelung geführt oder
b) die Führungsschlitze sind derart breit in Umfangsrichtung in Einbaulage betrachtet ausgebildet, dass auch bei Schrägbeschaufelung eine rein axiale Verschiebung bestimmter Größe in Umfangsrichtung möglich ist, frei von einer Verdrehung.

Gemäß einer besonders vorteilhaften Ausgestaltung, bei welcher die Führung des einen Stör- oder Drosselbereich bildenden Elementes , insbesondere der Drosselscheibe unabhängig von der Ausführung der hydrodynamischen Kupplung, insbesondere des schaufeltragenden Teiles und an anderen Bauelementen gemäß c) und d) erfolgen kann, ist dadurch charakterisiert, dass das jeweilige Schaufelrad in radialer Richtung im Querschnitt betrachtet entsprechend abgedreht ist. Dabei wird in Bezug auf die Beschaufelung ein ringförmiges Element entweder im Bereich des Außenumfanges oder im Bereich des Innenumfanges abgetragen, wobei die Beschaufelung im Querschnitt betrachtet, in radialer Richtung durch parallel zur Rotationsachse ausgebildete Schaufelkanten bzw. Schaufelenden charakterisiert ist. Dies bedeutet, die ringförmige Abdrehung erstreckt sich über die gesamte axiale Erstreckung des jeweiligen Schaufelrades oder zumindest einen Teilbereich bestimmter Größe, welcher wenigstens der Summe aus dem Verschiebeweg und der Breite der Drosselscheibe entspricht. Die Drosselscheibe kann dann im Bereich der Trennebene über die gesamte axiale Erstreckung und sogar über diese hinaus gegenüber dem jeweiligen Schaufelrad verschoben werden, wobei die Drosselscheibe auch an einem ortsfesten oder mit Relativdrehzahl zum jeweiligen Schaufelrad rotierenden Element gelagert und in axialer Richtung an diesem verschiebbar geführt sein kann.

Im anderen Fall, d. h. bei baulicher Einheit mit den Kreislauf führenden Wandbereichen, ist die Drosselscheibe Bestandteil eines Wandbereiches, vorzugsweise eines Teilbereiches des schaufeltragenden Teiles eines der beiden Schaufelräder. In dem Fall kann eine Verschiebung der Drosselscheibe in axialer Richtung nur durch Verschiebung des den Kreislauf führenden Teilbereiches des schaufeltragenden Teiles des jeweiligen Schaufelrades erfolgen. Dies wird dadurch realisiert, dass im Querschnitt der hydrodynamischen Komponente betrachtet ein Segment eines Schaufelrades in axialer Richtung verschiebbar ist. Bei diesem Segment handelt es sich dabei um einen Bereich im Bereich der radial äußeren Abmessungen des Arbeitsraumes oder im Bereich der radial inneren Abmessungen des Arbeitsraumes liegenden Teilbereich des jeweiligen Schaufelrades. Die Führung erfolgt dabei koaxial zur hydrodynamischen Komponente, insbesondere dem jeweiligen Schaufelrad. Je nach Ausgestaltung und Wahl des Segmentes am jeweiligen Schaufelrad kann die Größe des Verschiebeweges festgelegt werden. Dabei kann die Verschiebung bis zum bündigen Abschluß mit dem schaufeltragenden Teil erfolgen, oder aber der schaufeltragende Teil einen Anschlag für die Verschiebung der Drosselscheibe und damit des Segmentes in axialer Richtung des Schaufelrades bildet.

Bezüglich der Ausgestaltung der Drosselscheibe selbst bestehen eine Mehrzahl von Möglichkeiten. Diese ist im einfachsten Fall als ringscheibenförmiges Element, umfassend zwei zueinander parallel ausgerichtete und Wirkflächen bildende Stirnseiten, ausgeführt, wobei in Einbaulage betrachtet die Stirnseiten senkrecht zur Rotationsachse verlaufen. Gemäß einer besonders vorteilhaften Ausgestaltung kann die Kontur, insbesondere die an der Drosselscheibe ausgebildete Wirkfläche, durch entsprechende geometrische Formgebung und Kontur derart ausgeführt werden, dass diese zusätzlich vorteilhafte Eigenschaften im Hinblick auf die Führung des Strömungskreislaufes aufweist. Dabei werden vorzugsweise Verläufe der Wirkungsflächen gewählt, die sich in Strömungsrichtung jeweils vom Bereich des Außendurchmessers bzw. des Innendurchmessers in Strömungsrichtung ansteigend in den Arbeitsraum hineinerstrecken. Dies bedeutet, die Wirkungsfläche ist nicht als rein senkrecht ausgerichtete Fläche zum Strömungskreislauf ausgeführt, sondern ermöglicht eine Führung des Strömungskreislaufes entlang dieser in allen Betriebszuständen, wobei die Umlenkung bzw. Richtungsänderung allmählich erfolgt. Vorzugsweise wird die Kontur derart gewählt ist, dass diese bei vollständiger Verschiebung gegenüber dem jeweiligen Schaufelrad die Geometrie der Innenkontur des schaufeltragenden Bereiches und damit Schaufelgrundes in dieser Einstellung nachempfindet. In diesem Fall wird dann in dem Zustand, in welchem eine Beeinflussung nicht mehr gewünscht ist, auch keine Beeinflussung mehr vorgenommen, da die Drosselscheibe die Funktion des fehlenden schaufeltragenden Teilbereiches mit übernimmt.

Zur Realisierung der Verschiebung ist dem den Stör- oder Drosselbereich bildenden Element, insbesondere der Drosselscheibe eine Stelleinrichtung zugeordnet. Diese ist beliebig ausgestaltbar und kann mechanisch, hydraulisch, pneumatisch, elektrisch oder mittels einer Kombination aus diesen Möglichkeiten betätigt werden. Vorzugsweise werden hydraulische oder pneumatische Lösungen gewählt. Die Verschiebung erfolgt dann beispielsweise aufgrund der wenigstens mittelbaren Anbindung des den Stör- oder Drosselbereich bildenden Elementes, insbesondere der Drosselscheibe an eine Zylinder-/Kolbeneinheit, wobei die Beaufschlagung des Kolbens mit einem Druck einer beliebigen Druckquelle erfolgen kann. Der Beaufschlagungsdruck kann dabei beispielsweise von
a) einem dem Druck im Zufuhrkanal oder -raum entsprechenden Druck oder einem proportional zu diesem vorliegenden Druck oder
b) dem Gehäuseinnendruck oder
c) einem Überlagerungsdruck aus a) und b) oder
d) einem frei wählbaren Druck oder
e) einem beliebigen im Antriebstrang ohnehin zur Verfügung stehenden Druck, beispielsweise Getriebedruck etc.
f) einem Überlagerungsdruck aus einem der in a) bis c) genannten Drücke und einem Druck gemäß d) oder e) gebildet werden.

Die erfindungsgemäße Lösung ist für jegliche Art hydrodynamischer Kupplungen geeignet. Dabei kann es sich um hydrodynamische Kupplungen mit rotierendem Gehäuse, d. h. mit einer drehfest mit dem Primärschaufelrad verbundenen Primärradschale sowie hydrodynamische Kupplungen mit ortsfestem, d. h. ruhendem Gehäuse handeln. Ferner ist die erfindungsgemäße Lösung insbesondere in Anfahreinheiten, umfassend ein Anfahrelement in Form einer hydrodynamischen Kupplung mit zugeordneter Einrichtung zur Überbrückung in Form einer Überbrückungskupplung anwendbar. In diesem Fall ist vorzugsweise die Überbrückungskupplung als Scheibenkupplung ausgeführt und parallel zur hydrodynamischen Kupplung angeordnet. Der hydrodynamischen Kupplung ist ein Betriebsmittelversorgungs- und/oder Führungssystem zugeordnet, welches eine zentrifugale und zentripetale Durchströmung der hydrodynamischen Kupplung ermöglicht. Im Fall der zentripetalen Durchströmung wird dabei wenigstens ein Teil des um den Außenumfang der hydrodynamischen Kupplung geführten und im Bereich des Außenumfanges in der Trennebene eingebrachten Betriebsmittels zur Beaufschlagung der Überbrückungskupplung genutzt. Diese wird durch den in diesem Betriebszustand an der Überbrückungskupplung vorliegenden Druck deaktiviert, d. h. die miteinander reibschlüssig in Wirkverbindung bringbaren Elemente werden in einem Abstand zueinander gehalten. Bei zentrifugaler Durchströmung erfolgt die Betriebsmittelzufuhr in den Bereich des Innendurchmessers des torusförmigen Arbeitsraumes und die Durchströmung erfolgt in zentrifugaler Richtung, d. h. im Bereich des Außenumfanges der hydrodynamischen Kupplung aus dieser hinaus. Der Baueinheit aus hydrodynamischer Kupplung und Überbrückungskupplung ist somit ein erster Betriebsmittelführungskanal oder -raum zugeordnet, der zumindest zwischen der Stelleinrichtung der Überbrückungskupplung und einem die Baueinheit umschließenden Gehäuse gebildet wird. Ferner ist ein zweiter Betriebsmittelführungskanal oder -raum vorgesehen, der im Bereich des Außenumfanges am Innendurchmesser des torusförmigen Arbeitsraumes angeordnet ist. Bei den Räumen kann dabei die Zuordnung als Zufuhrkanal oder - raum oder Abfuhrkanal oder -raum zum oder vom Arbeitsraum wahlweise vorgegeben werden. Dies wird über entsprechende Stelleinrichtung im Betriebsmittelversorgungs- und/oder Führungssystem realisiert, wobei diese vorzugsweise in Form von Ventileinrichtungen ausgeführt sind. Entsprechend der Wahl der Stellgröße der der in axialer Richtung verschiebbaren Drosselscheibe zugeordneten Stelleinrichtung können dann auch die in den Betriebsmittelzufuhrkanälen oder -räumen vorliegenden Drücke zur Beaufschlagung genutzt werden.

Gemäß einer besonders vorteilhaften Ausgestaltung ist die hydrodynamische Kupplung, insbesondere die Beschaufelung mit einem Kernring ausgebildet. Dies bedeutet, dass die Beschaufelung im Kernraum mit einer Ausnehmung an den zum jeweils anderen Schaufelrad, insbesondere dem Turbinenrad weisenden Enden versehen ist, die für die gesamte Beschaufelung betrachtet, einen entsprechenden Hohlraum beschreibt. Ferner kann die Beschaufelung an den beiden Schaufelrädern variiert werden. Vorzugsweise ist das Sekundärschaufelrad schräg beschaufelt. Dies gilt in Analogie auch für die Beschaufelung im Austrittsbereich aus dem Primärschaufelrad. Damit wird es möglich, bessere λ -Werte zu erzielen. Demgegenüber ist die Beschaufelung im Bereich des Eintrittes am Primärschaufelrad gerade ausgeführt, um hier eine geradlinige Verschiebung der Drosselscheibe bei Anordnung im Bereich des inneren Durchmessers des Arbeitsraumes zu ermöglichen. Dies gilt in Analogie auch im Umkehrschluss für die Anordnung der Drosselscheibe im Bereich des Außendurchmessers des Arbeitsraumes, wobei dann die Schrägbeschaufelung am Pumpeneintritt erfolgt.
Vorzugsweise wird jedoch erstere Variante gewählt. Dies bedeutet, dass die einzelne Schaufel am Primärschaufelrad nicht durch einen geradlinigen Verlauf oder in einem Winkel zur radialen Richtung, sondern einen ersten Teilbereich umfasst, der in radialer Richtung verläuft und einen zweiten Teilbereich, der in einem Winkel zur radialen Richtung verläuft.

Die erfindungsgemäße Lösung wird nachfolgend anhand von Figuren erläutert. Darin ist im Einzelnen Folgendes dargestellt:
- Figur 1: verdeutlicht in schematisch vereinfachter Darstellung das Grundprinzip und den Grundaufbau einer erfindungsgemäß gestalteten hydrodynamischen Kupplung mit axial verschiebbarer Drosselscheibe;
- Figuren 2a und 2b: verdeutlichen eine Ausgestaltung mit Führung der Drosselscheibe an der Beschaufelung;
- Figuren 3a bis 3c: verdeutlichen weitere mögliche Anordnungen der Drosselscheibe;
- Figuren 4a und 4b: verdeutlichen besonders vorteilhafte Ausgestaltungen mit Außen- und Innendrossel;
- Figur 5: zeigt eine besonders vorteilhafte Ausgestaltung einer hydrodynamischen Kupplung mit Drosselscheibe;
- Figur 6a: verdeutlicht eine Anwendung in einer Kupplung mit rotierendem Gehäuse;
- Figur 6b: zeigt eine Ausführung mit ruhendem Gehäuse;
- Figur 6c: zeigt eine mögliche Ausführung mit der Drosselscheibe zugeordneter Stelleinrichtung;
- Figur 7: verdeutlicht anhand von Kennlinien die Wirkungsweise der Drosselscheibe in unterschiedlichen Stellungen.

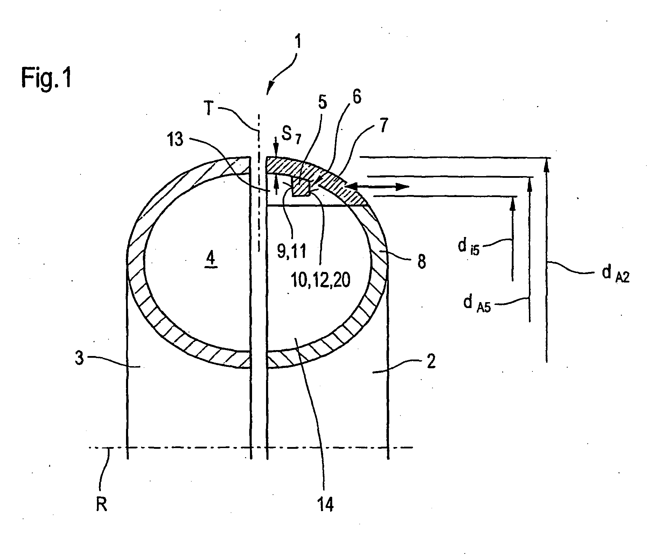

Die Figur 1 verdeutlicht in schematisch stark vereinfachter Darstellung den Grundaufbau und das Grundprinzip einer erfindungsgemäß gestalteten hydrodynamischen Kupplung 1, umfassend mindestens ein Primärschaufelrad 2 und ein Sekundärschaufelrad 3, die miteinander einen Arbeitsraum 4 bilden, mit einem koaxial zur Kupplung 1 angeordneten und in axialer Richtung verschiebbaren, einen Drosselbereich oder Störbereich bildenden Element, insbesondere in Form einer Drosselscheibe 5. Bei dieser Ausführung ist die Drosselscheibe 5 dem mit einem Antrieb koppelbaren Primärschaufelrad 2 zugeordnet. Die Drosselscheibe ist dabei ringscheibenförmig ausgeführt. Diese erstreckt sich mit ihrer Wirkungsfläche in radialer Richtung in den Arbeitsraum 4 hinein. Bei der in der Figur 1 dargestellten Ausgestaltung der Drosselscheibe 5 handelt es sich um eine sogenannte Außendrossel 6. Diese ist dadurch charakterisiert, dass diese im Bereich des radial äußeren Durchmessers d_{A4} des Arbeitsraumes 4 wirksam wird. Die Drosselscheibe 5 ist dabei in axialer Richtung, d. h. parallel zur Rotationsachse R der hydrodynamischen Kupplung 1, verschiebbar. Die Verschiebung erfolgt dabei vom Anfahrvorgang der Kupplung 1 aus betrachtet von einem Bereich im Bereich der Trennebene T über wenigstens einen Teilbereich a der axialen Erstreckung des jeweiligen Schaufelrades, hier des Primärschaufelrades 2. Die axiale Verschiebung kann dabei lediglich über einen Teilbereich der axialen Erstreckung des jeweiligen Schaufelrades, hier des Primärschaufelrades 2 oder aber vorzugsweise vollständig über das gesamte Schaufelrad 2 hinaus, erfolgen. Bei der in der Figur 1 dargestellten Ausführung ist die Drosselscheibe 5 Bestandteil eines Wandbereiches 7 des schaufeltragenden Teiles 8 des jeweiligen Schaufelrades, hier des Primärschaufelrades 2, wobei dieser Wandbereich 7 im wesentlichen im Bereich des Außendurchmessers d_{A2} des Primärschaufelrades 2 vorgesehen ist und dieser Wandbereich 7 gegenüber dem restlichen nicht verschiebbaren schaufeltragenden Teil 8 in axialer Richtung verschiebbar ist. Je nach Lage des Wandbereiches 7 erfolgt damit aufgrund der Zwangskopplung auch eine Verschiebung der Drosselscheibe 5. Die Drosselscheibe 5 ist dabei in diesem Fall durch einen Innendurchmesser d₅ charakterisiert, welcher kleiner ist als der den Außendurchmesser des Arbeitsraumes 4 bestimmende Durchmesser d_{A4}, jedoch größer als der innere Durchmesser d₄ des Arbeitsraumes 4 im Bereich der Trennebene T. Der äußere Durchmesser d_{A5} der Drosselscheibe 5 entspricht in diesem Fall dem äußeren Durchmesser d_{A4} des Arbeitsraumes 4 bzw. im konkreten Fall des Primärschaufelrades 2 dem inneren Durchmesser dᵢ₇₋₂ des Primärschaufelrades, der durch den Wandbereich 7 charakterisierenden Innendurchmesser im radial äußeren Bereich des Primärschaufelrades 2 charakterisiert ist. Bei diesem Durchmesser handelt es sich dabei um die Differenz aus dem theoretischen Außendurchmesser d_{A2} des Primärschaufelrades und der Wandstärke S₇ des Wandbereiches 7. Die Drosselscheibe 5 ist im dargestellten Fall beispielhaft als ebene Scheibe ausgeführt. Diese umfasst zwei jeweils eine ebene Stirnfläche 9 und 10 bildende Stirnseiten 11 und 12, wobei jeweils die Stirnfläche 9 mit der Stirnseite 11 zur Trennebene hin gerichtet ist, während die Stirnfläche 10 an der Stirnseite 12 von der Trennebene T weggerichtet ist und bezogen auf die Ausgangslage der Drosselscheibe 5 zu Beginn und evtl. während des Anlaufvorganges in Verschiebungsrichtung weist. Die Stirnfläche 10 stellt dabei wenigstens teilweise im dargestellten Fall vollständig die Wirk- bzw. Beeinflussungsfläche 20 für den Strömungskreislauf im Arbeitsraum 4 dar. Bei der in der Figur 1 dargestellten Ausführung ist dabei der Wandbereich 7 des schaufeltragenden Teiles 8 verschiebbar. Diesem angeschlossen können auch die daran befestigten Schaufelbereiche 13 der Schaufeln 14 mit verschiebbar ausgeführt sein. Die Schaufeln 14 sind dann unterteilt. Der schaufeltragende Teil 8 bzw. der Wandbereich 7 des schaufeltragenden Teiles 8 mit dem angeschlossenen Schaufelbereich 13 ist dabei ebenfalls ringförmig ausgestaltet. Beide sind jedoch drehfest miteinander gekoppelt und in axialer Richtung verschiebbar gegeneinander ausgeführt. Diese Ausführung gewährleistet eine vollständige Verschiebbarkeit gegenüber dem restlichen schaufeltragenden Teil 8 in axialer Richtung, unabhängig von der Größe des für die Funktionsweise vorgesehenen Verschiebeweges I in axialer Richtung. Denkbar ist jedoch, wie in Figur 1 nicht dargestellt, auch die Verschiebung nur des Wandbereiches 7 ohne Kopplung mit Schaufelbereichen 13. In diesem Fall wird der Wandbereich 7 lediglich zur Strömungsführung genutzt und dient nicht primär der Lagefixierung und Befestigung der Schaufeln 14. Diese erfolgt über den restlichen schaufeltragenden Bereich 8.

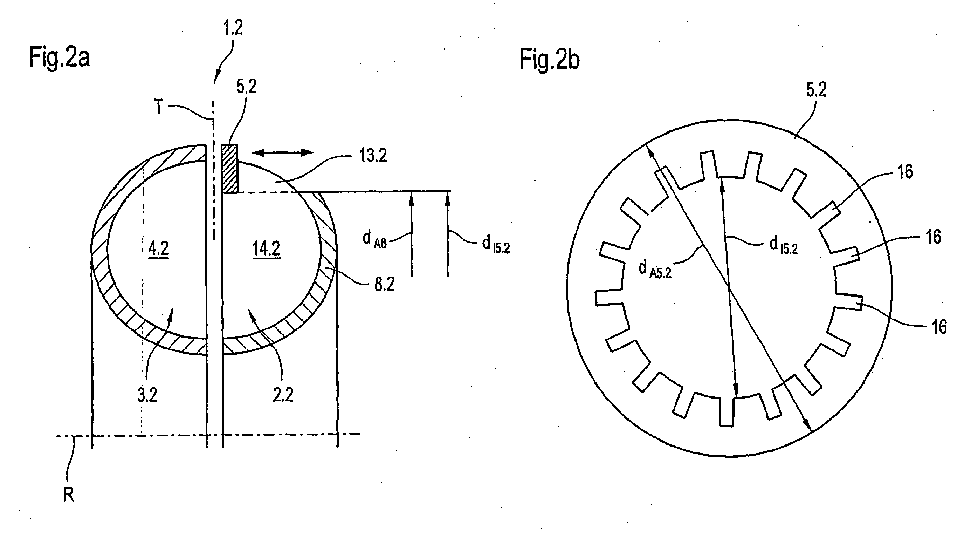

Dem gegenüber verdeutlichen die Figuren 2a und 2b anhand zweier Ansichten eine alternative Ausgestaltung einer Ausführung einer hydrodynamischen Kupplung 1.2 mit axial verschiebbarer Drosselscheibe 5.2. Diese ist in diesem Fall als separates Bauteil ausgeführt und ebenfalls in axialer Richtung gegenüber dem Schaufelrad, hier beispielhaft dem Primärschaufelrad 2.2, derart verschiebbar, dass eine Änderung des Wirkbereiches im Arbeitsraum 4.2 durch die Verschiebung erzielt wird. Auch hier ist die Drosselscheibe 5.2 als Außendrossel 6.2 ausgebildet. D. h., diese ist im radial äußeren Bereich des Arbeitsraumes 4.2 angeordnet und kommt in diesem zum tragen. Dabei wird die Strömung in diesem Bereich um die Drossel bzw. die Drosselscheibe 5.2 umgelenkt, ehe diese in das Sekundärschaufelrad 3 übertritt. Bei dieser Ausführung sind die Schaufeln 14.2 derart angeordnet, dass diese im radial äußeren Bereich des Primärschaufelrades 2.2 über den schaufeltragenden Teil 8.2 überstehen, d. h., nur über einen Teil ihrer Erstreckung in radialer Richtung am schaufeltragenden Teil 8.2 geführt sind und der radial äußere Bereich des Primärschaufelrades 2.2 frei von dem in der Figur 1 dargestellten Wandbereich 7.2 ist. Die Drosselscheibe 5.2 ist in diesem Fall geschlitzt ausgeführt und wird an den einzelnen in Umfangsrichtung zueinander beabstandeten angeordneten Schaufeln 14.2 geführt. Diese sind vorzugsweise gerade ausgerichtet, d. h., die einzelne Schaufel 14.2 ist in einer Ebene angeordnet, die durch eine vertikal theoretische Rotationsachse und der Rotationsachse charakterisiert ist. Die axial verschiebbare Drosselscheibe 5.2 wird dabei in einem Bereich der Schaufel 14.2, hier insbesondere einem frei überstehenden Schaufelbereich 13.2, geführt, der frei von einer direkten Führung am schaufeltragenden Teil 8.2 ist und lediglich über die anderen Schaufelbereiche im schaufeltragenden Teil 8.2 in seiner Lage fixiert wird. Ausführungen mit Schrägbeschaufelung sind ebenfalls denkbar, jedoch sind dann die Führungsschlitze mit entsprechender Breite zu gestalten oder die axiale Verschiebung durch Verdrehung in Umfangsrichtung zu gewährleisten. Je nach Größe des Schaufelbereiches 13.2 bzw. des schaufeltragenden Teiles 8.2 kann die Verschiebung bei alleiniger Führung der Drosselscheibe 5.2 an der Beschaufelung 14.2 in axialer Richtung gewährleistet werden. Ist der Endbereich des schaufeltragenden Bereiches 8.2 in einer Ebene, die senkrecht zu einer Ebene verläuft, die durch eine Senkrechte zur Rotationsachse und Senkrechte in vertikaler Richtung charakterisiert ist bzw. die parallel zur Trennebene T zwischen Primärschaufelrad 2.2 und Sekundärschaufelrad 3.2 verläuft, kann eine optimale Verschiebung der Drosselscheibe 5.2 erzielt werden. Diese kann je nach Ausgestaltung ihres Innendurchmesser d_{i5.2} entweder bis in den Bereich außerhalb des Schaufelrades, hier des Primärschaufelrades 2.2 erfolgen oder aber zumindest bis in den Bereich des schaufeltragenden Teiles 8.2. Ist im dargestellten Fall der Innendurchmesser dᵢ₅.₂ gleich oder vorzugsweise größer als der Außendurchmesser d_{A8} des schaufeltragenden Teiles 8.2, kann eine bündige Verschiebung zum schaufeltragenden Teil 8.2 in axialer Richtung erfolgen oder sogar über den schaufeltragenden Teil 8.2 aus dem Arbeitsraum 4.2 vollständig hinaus. Dies wird jedoch nicht angestrebt, da dann keine Führbarkeit der Drosselscheiben 5.2 ohne zusätzliche Hilfsmittel mehr gegeben ist. Vorzugsweise werden dabei Ausführungen angestrebt, bei denen eine Verschiebung möglichst weit in Richtung des schaufeltragenden Teiles 8.2 bzw. der durch diese gebildeten Innenwand 15 erfolgt. Vorzugsweise wird ein bündiger Abschluss bzw. eine Anschlagsfunktion des schaufeltragenden Teiles 8.2 angestrebt.

In der Figur 2b ist dazu eine Ausführung der Drosselscheibe 5.2 mit entsprechend zur Führung an den einzelnen Schaufeln 14.2 am Innendurchmesser d_{i5.2} vorgesehenen Schlitzen bzw. Führungen 16 in einer Ansicht von rechts dargestellt. Diese Ausführung der Drosselscheibe 5.2 stellt eine mögliche Ausführung dar. Die erfindungsgemäße Ausführung ist jedoch nicht auf diese fixiert. Die Geometrie der Schlitze 16 ist der Geometrie der Schaufeln 14.2 angepasst.

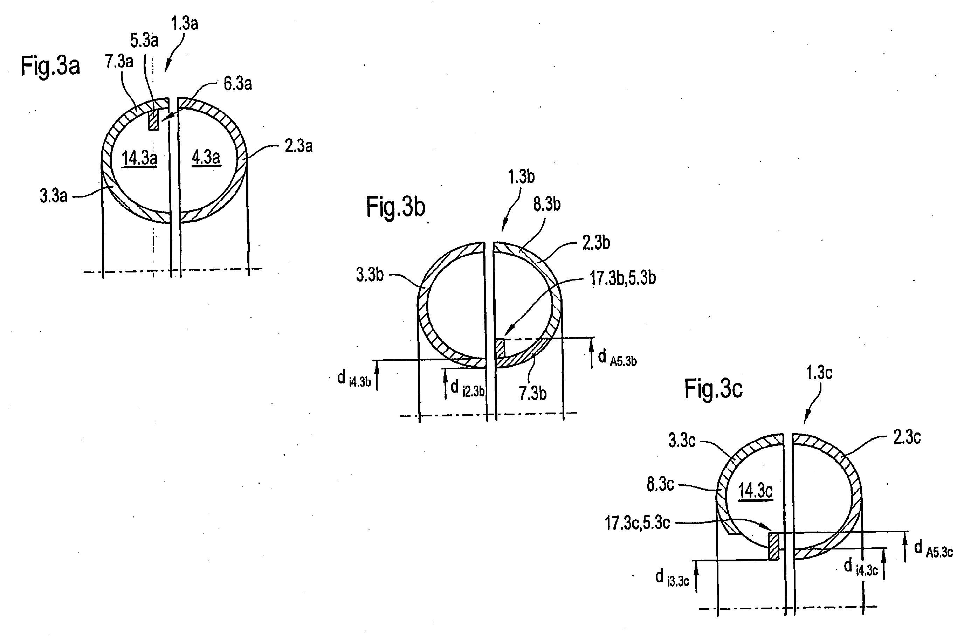

Die Figuren 3a bis 3c verdeutlichen weitere Anordnungsmöglichkeiten einer erfindungsgemäß in axialer Richtung verschiebbar ausgeführten Drosselscheibe 5.3 in schematisch stark vereinfachter Darstellung anhand einer stark vereinfacht wiedergegebenen hydrodynamischen Kupplung 1.3. Bezüglich der Anbindung und Führung der Drosselscheibe 5.3 gelten die in den Figuren 1 und 2 beschriebenen Ausgestaltungsmöglichkeiten, wobei jedoch keine Beschränkung auf diese erfolgt. Diesbezüglich kann auf diese Figuren stellvertretend verwiesen werden. Bei der in der Figur 3a dargestellten Ausführung ist die Drosselscheibe 5.3a dem Sekundärschaufelrad 3.3a zugeordnet. Dabei ist auch hier die Drosselscheibe 5.3a als Außendrossel 6.3a ausgeführt und wird im radial äußeren Bereich des Arbeitsraumes 4.3a beispielhaft am Sekundärschaufelrad 3.3a wirksam. Die Drosselscheibe 5.3a ist auch hier vorzugsweise als Ringscheibe ausgebildet. Diese kann entweder einteilig mit einem Wandbereich 7.3a ausgeführt werden oder aber, wie in der Figur 2a beschrieben, in analoger Bauweise an der Beschaufelung 14.3a des Sekundärschaufelrades 3.3a geführt werden. Bezüglich des Außen- und Innendurchmessers gelten die für die Anordnung der Primärschaufelrad 2.2a getätigten Ausführungen.

Die Figuren 3b und 3c verdeutlichen in schematisch stark vereinfachten Darstellung Möglichkeiten der Anordnung einer axial verschiebbaren Drosselscheibe 5.3b und 5.3c als Innendrossel 17.3b und 17.3c, wobei die Drosselscheibe 5.3b bzw. 5.3c jeweils im Bereich der radial inneren Abmessungen der hydrodynamischen Kupplung 1.3b, 1.3c, insbesondere des Arbeitsraumes 4.3b bzw. 4.3c, angeordnet ist. Diese Ausbildung der Drosselscheibe 5.3b und 5.3c ist jeweils dadurch charakterisiert, dass deren Außendurchmesser d_{A5.3b} bzw. d_{A5.3c} jeweils größer ist als der Innendurchmesser d_{iA.3b} bzw. d_{i4.3c} des Arbeitsraumes 4.3b bzw. 4.3c sowie speziell dᵢ₂._{3b} oder d_{i2.3c} oder d_{i3.3b} bzw. d_{i3.3c} und kleiner als der Innendurchmesser d_{i4.3b} bzw. d_{i4.3c} des Arbeitsraumes 4.3b, 4.3c bzw. des durch die Schaufelräder 2.3b, 2.3c bzw. 3.3b, 3.3c bestimmten Innendurchmessers im radial äußeren Bereich der hydrodynamischen Kupplung 1.3b bzw. 1.3c. Die Drosselscheibe 5.3b, 5.3c erstreckt sich somit in radialer Richtung in den Arbeitsraum 4.3b bzw. 4.3c wenigstens teilweise hinein. Die Figur 3b verdeutlicht dabei beispielhaft eine Ausgestaltung der Drosselscheibe 5.3b am Primärschaufelrad 2.3b, wobei die Anordnung im Bereich des Innendurchmessers des durch das Primärschaufelrad 3.3b bestimmten Teilbereiches des Arbeitsraumes 4.3b charakterisiert ist. Bei dieser Ausführung bilden dabei beispielhaft die Drosselscheibe 5.3b und der Wandbereich 7.3b eine bauliche Einheit, wobei der Wandbereich 7.3b des schaufeltragenden Teiles 8.3b verschiebbar ist. Die Verschiebbarkeit erfolgt auch hier in axialer Richtung. Die Figur 3c verdeutlicht demgegenüber eine Ausführung gemäß der Figur 2 mit Zuordnung zum Sekundärschaufelrad 3.3c, bei welcher die Drosselscheibe mit am Außenumfang angeordneten Schlitzen 18 ausgeführt ist, die im Schaufelbereich 13.3c, der frei von einer Führung am schaufeltragenden Teil 8.3c ist, geführt wird.

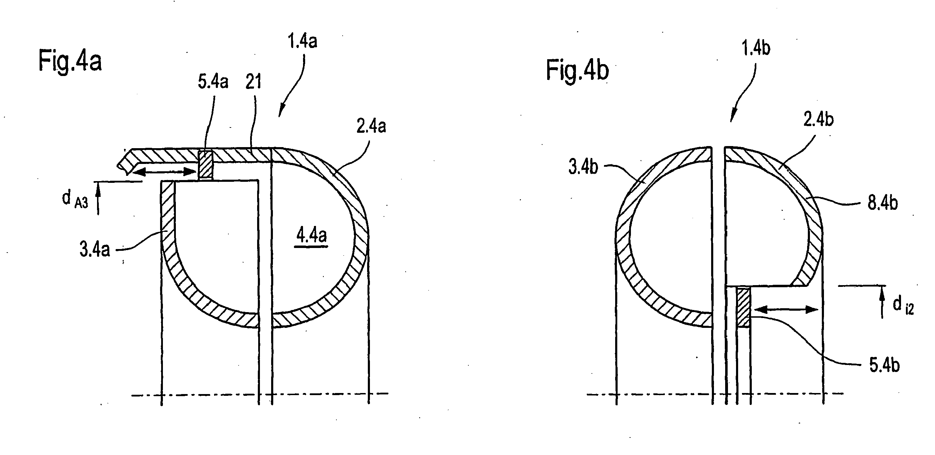

Gemäß einer besonders vorteilhaften Ausgestaltung 1.4a ist gemäß Figur 4a das den Kreislauf führende Schaufelrad in Form des Primärschaufelrades 2.4a oder gemäß Figur 4b das Sekundärschaufelrad 3.4b - derart ausgestaltet, dass dieses im Bereich der Führung für die Drosselscheibe 5.4a, 5.4b abgedreht ausgeführt ist. Dies bedeutet, dass das Schaufelrad im Querschnitt betrachtet frei von einem Schaufelradsegment 19 ist, welches entweder im radial äußeren Bereich des Schaufelrades 2.4a, 3.4b oder aber je nach Anordnung der Drosselscheibe 5.4a, 5.4b im radial inneren Bereich vorgesehen ist. Dazu ist das Schaufelrad 2.4a, 3.4b in diesem Bereich, insbesondere die Beschaufelung, vorzugsweise abgedreht. Diese Abdrehung ist dadurch charakterisiert, dass die Schaufel 14.4a, 14.4b im Querschnitt betrachtet durch eine gerade Kante in radialer Richtung entweder im Bereich des radial äußeren Durchmessers d_{A2}, d_{A3} oder im Bereich des radial inneren Durchmessers d_{I2}, d_{I3} des Arbeitsraumes 4.4a, 4.4b bzw. der Beschaufelung 14.4a, 14.4b charakterisiert ist, und in diesem Bereich keine Führung des Strömungskreislaufes erfolgt. In dem theoretisch durch die Beschaufelung im Normalfall ausgefüllten Bereich, der nunmehr durch die Abdrehung weggelassen wurde, wird erfindungsgemäß die Drosselscheibe 5.4a bzw. 5.4b angeordnet, entsprechend Figur 4a im Bereich des radial äußeren Durchmessers d_{A3} des Sekundärschaufelrades 3.4a und entsprechend Figur 4b im Bereich des radial inneren Durchmessers d_{I2} des Primärrades 2.4b. Die Drosselscheibe 5.4a, 5.4b kann somit ungehindert gegenüber dem Schaufelrad 2.4 verschoben werden, wobei die Verschiebung beliebig erfolgen kann. Ferner bietet diese Möglichkeit den Vorteil, dass die Drosselscheibe 5.4a, 5.4b nicht mehr am Schaufelrad selbst - Primärschaufelrad 2.4b oder für das Sekundärschaufelrad 3.4a - geführt sein muss, sondern auch an einem mit Relativdrehzahl zu diesem rotierenden Element geführt sein kann. Denkbar ist auch eine Führung an einem ortsfesten Bauteil, wie beispielsweise dem hier nur angedeuteten Gehäuse 21.

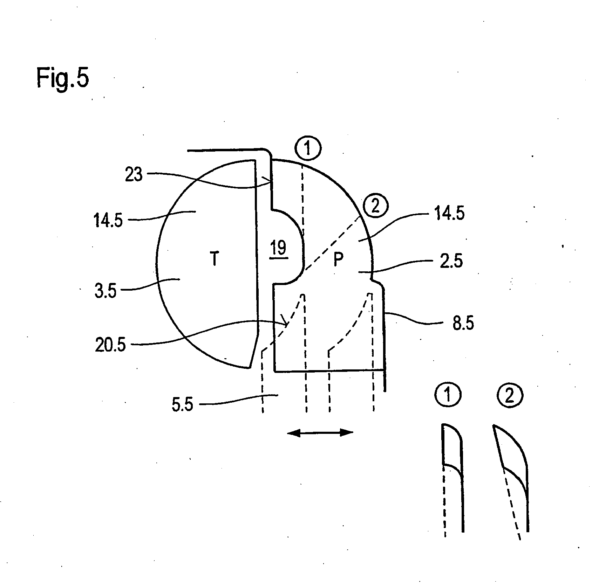

Die Figur 5 verdeutlicht eine weitere vorteilhafte Ausgestaltung einer hydrodynamischen Kupplung in schematisch stark vereinfachter Darstellung im Querschnitt betrachtet mit erfindungsgemäß axial verschiebbar ausgeführter Drosselscheibe 5.5. Diese ist im dargestellten Fall im Querschnitt betrachtet mit einem Profil 22 versehen. Das Profil 22 ist dabei derart ausgeführt, dass dieses eine Führungsfläche 20.5 für die Strömung des Strömungskreislaufes bildet, wobei diese Fläche ungleich parallel zur Trennebene T verläuft. Vorzugsweise wird eine zum Mittelpunkt des Arbeitsraumes hin ansteigende Kontur gewählt. Dies bedeutet, dass an der Drosselscheibe 5.5 der Strömungskreislauf entsprechend der Geometrie und des Verlaufs der Führungsfläche 20.5 abgelenkt wird. Auch diese Drosseischeibe 5.5 ist in axialer Richtung verschiebbar und ermöglicht bei entsprechender Ausgestaltung im Zustand einer nicht gewünschten Beeinflussung eine mit dem restlichen schaufeltragenden Teil 8.5 bündige Führungsfläche, die ohne auf den Strömungskreislauf gegenüber dem theoretischen Verlauf erfolgende Richtungsänderung sich an den schaufeltragenden Teil 8.5 anschließt und die im Normalfall vorliegende Innenkontur des Schaufelrades 2.5 oder 3.5 - je nach Zuordnung zu Primärschaufelrad- oder Sekundärschaufelrad - beschreibt. Die Beschaufelung 14.5 ist im Bereich der zu der Beschaufelung des anderen Schaufelrades, hier des Sekundärrades 3.5 weisenden Schaufelenden 23 mit einer Ausnehmung unter Bildung eines Kernraumes 19 versehen.

Ferner ist die Beschaufelung 14.5 des Primärrades 2.5 über deren radiale Erstreckung mit Bereichen unterschiedlichster Richtung ausgeführt. Dabei ist im dargestellten Fall der die Drosselscheibe 5.5 führende Bereich einer jeden Schaufel 14 der Beschaufelung 14.5 gerade und der sich in radialer Richtung erstreckende Teil außerhalb des die Drosselscheibe 5.5 führenden Bereiches geneigt gegenüber einer Ebene, die senkrecht zur Trennebene T verläuft, ausgeführt.

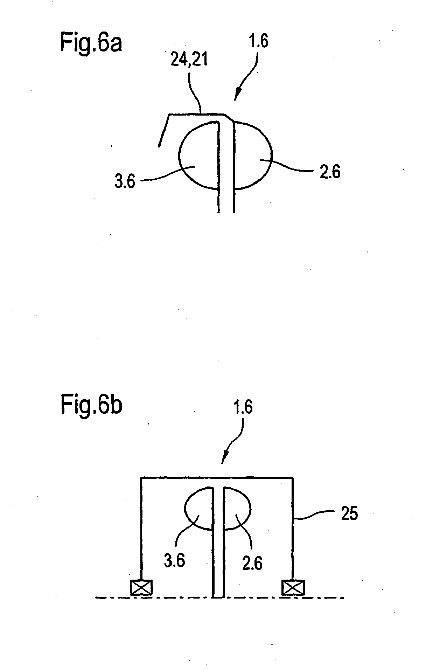

Die Figuren 6a und 6b verdeutlichen in schematisch stark vereinfachter Darstellung Einsatzmöglichkeiten der erfindungsgemäß gestalteten Kupplung 1. Diese kann gemäß Figur 6a mit einem rotierenden Gehäuse 21 in Form einer Primärradschale 24 ausgeführt sein oder gemäß Figur 6b von einem ruhenden Gehäuse 25 umschlossen werden. Eine Führung des eine Drossel- oder Störstelle bildenden Elementes kann je nach Ausgestaltung der Kupplung 1 und der Beschaufelung 14 auch an den Gehäusen 21 bzw. 25 erfolgen.

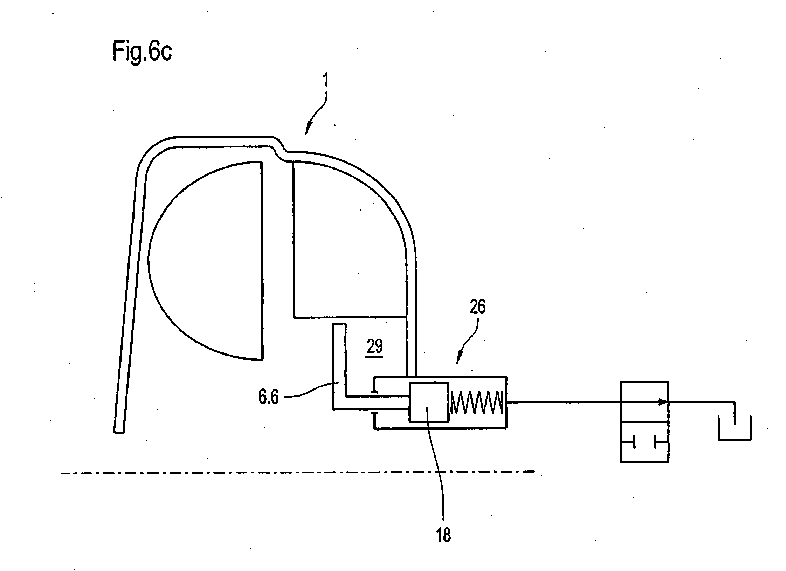

Figur 6c verdeutlicht anhand einer Ausführung gemäß Figur 3c eine mögliche Ausgestaltung mit Stelleinrichtung 26. Diese ist beispielsweise als Zylinder-/Kolbeneinheit 27 ausgebildet. Die Beaufschlagung des mit der Drosselscheibe 6.6 gekoppelten Kolbens 18 erfolgt dabei beispielhaft mit einem vom Gehäuseinnenraum 29 und einem Steuerdruck gebildeten Differenzdruck.

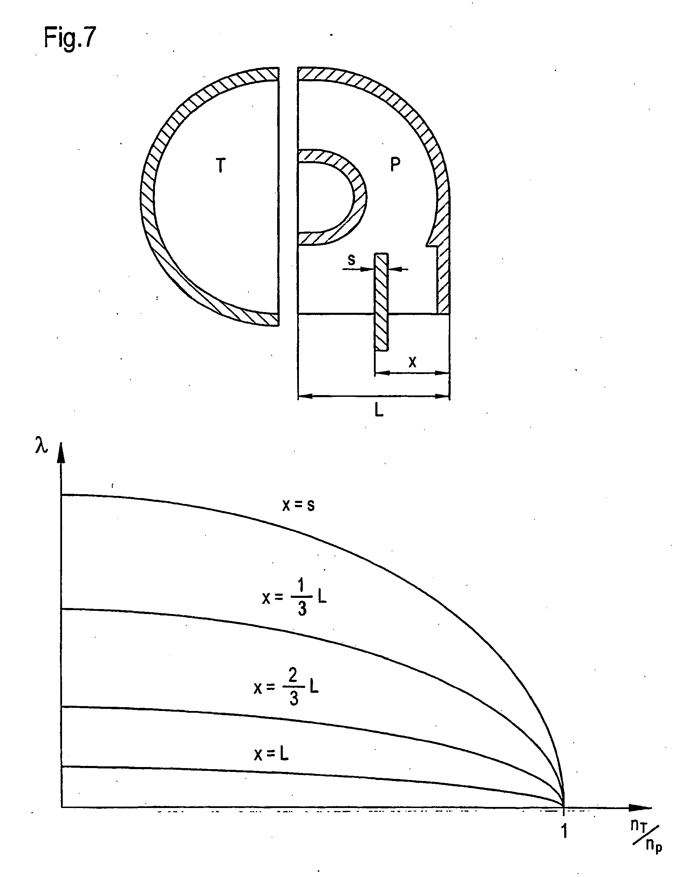

Figur 7 verdeutlicht beispielhaft anhand eines γ-λ-Diagrammes die Wirkungsweise des den Stör- und Drosselbereich bildenden Elementes 5 in unterschiedlichen Positionen über das Drehzahlverhältnis aufgetragen. Daraus wird ersichtlich, dass gerade im Anfahrbereich, d. h. bei sehr hohem Schlupf gegenüber den bekannten Ausführungen aus dem Stand der Technik wesentlich geringere Momente aufgrund der Wirkung der Drosselscheibe 5 im Bereich der Trennebene T aufgenommen werden. Bei sehr geringem Schlupf, d. h. einem dazu proportionalem Drehzahlverhältnis γ im Bereich von 1 bei erfolgter Verschiebung der Drosselscheibe 5 noch außerhalb des Arbeitsraumes bzw. in eine Position, in welcher diese keine Störung des Strömungskreislaufes mehr bewirkt, ist Keine Wirkung der Drosselscheibe erkennbar.

Generell erfolgt die Verschiebung der Drosselscheibe vorzugsweise jeweils vom Bereich der Trennebene zwischen den Schaufelrädern über wenigstens einen Teitbereich der axialen Erstreckung des jeweiligen Schaufelrades, d. h. einen Teil des Arbeitsraumes, vorzugsweise an diesem heraus. Denkbar wäre jedoch auch eine Verschiebbarkeit über einen Teil der axialen Erstreckung beider Schaufelräder, wobei die Umgebung, insbesondere Lagerung bzw. Führung der Drosselscheibe entsprechend anzupassen wäre.

### Bezugszeichenliste

- 1, 1.2, 1.3a, 1.3b, 1.3c, 1.4a, 1.4b: hydrodynamische Kupplung
- 2, 2.2, 2.3a 2.3b, 2.3c, 2.4, 2.4a, 2.4b: Primärschaufelrad
- 3, 3.2, 3.3a, 3.3b, 3.3c, 3.4, 3.4a, 3.4b: Sekundärschaufelrad
- 4, 4.2, 4.3a, 4.3b, 4.3c, 4.4, 4.4a, 4.4b: Arbeitsraum
- 5, 5.2, 5.3a 5.3b, 5.3c, 5.4a 5.4b, 5.5: Drosselscheibe
- 6, 6.2, 6.3a: Außendrossel
- 7,7.2: Wandbereich
- 8, 8.2: schaufeltragender Teil
- 9: Stirnfläche
- 10: Stirnfläche
- 11: Stirnseite
- 12: Stirnseite
- 13: Schaufelbereich
- 14: Schaufel
- 15: Innenwand
- 16: Schlitze
- 17.3b; 17.3c: Innendrossel
- 18: Schlitze
- 19: Kernraum
- 20: Wirk- bzw. Beeinflussungsfläche
- 21: Gehäuse
- 22: Profil
- 23: Schaufelenden
- 24: Primärradschale
- 25: ruhendes Gehäuse
- 26: Stelleinrichtung
- 27: Zylinder-/Kolbeneinheit
- 28: Kolben
- 29: Gehäuseinnenraum
- I: Verschiebeweg
- S₇: Wandstärke
- a: Teilbereich
- T: Trennebene
- R: Rotationsachse
- d_{A4}: äußerer Durchmesser des Arbeitsraumes
- d_{A2}: Außendurchmesser des Primärschaufelrades
- d_{I5}: Innendurchmesser der Drosselscheibe '
- d_{I4}: innerer Durchmesser des Arbeitsraumes
- d_{A8}: Außendurchmesser schaufeltragender Teil
- d_{A5}: äußerer Durchmesser der Drosselscheibe
- dᵢ₇₋₂: innerer Durchmesser des Primärschaufelrades im Bereich der radial äußeren Abmessung
- dᵢ₅._{2.}: Innendurchmesser Drosselscheibe

## Patentansprüche

1. Hydrodynamische Kupplung (1; 1.2; 1.3a; 1.3b; 1.3c; 1.4a; 1.4b);
1.1 mit einem Primärschaufelrad (2; 2.2; 2.3a; 2.3b; 2.3c; 2.4; 2.4a; 2.4b) und einem Sekundärschaufelrad (3; 3.2a; 3.3a; 3.3b; 3.3c; 3.4; 3.4a; 3.4b), die miteinander einen Arbeitsraum (4; 4.2; 4.3a; 4.3b; 4.3c; 4.4; 4.4a; 4.4b) bilden;
1.2 mit Mitteln zur Beeinflussung des Übertragungsverhaltens der hydrodynamischen Kupplung (1; 1.2; 1.3a; 1.3b; 1.3c; 1.4a; 1.4b), insbesondere zur Beeinflussung des Strömungskreislaufes im Arbeitsraum (4; 4.2; 4.3a; 4.3b; 4.3c; 4.4; 4.4a; 4.4b), umfassend wenigstens ein einen Stör- oder Drosselbereich bildendes Element (5; 5.2; 5.3a; 5.3b; 5.3c; 5.4a; 5.4b; 5.5), das sich wenigstens teilweise in den Arbeitsraum (4; 4.2; 4.3a; 4.3b; 4.3c; 4.4; 4.4a; 4.4b) erstreckt;
1.3 das den Stör- oder Drosselbereich bildende Element (5; 5.2; 5.3a; 5.3b; 5.3c; 5.4a; 5.4b; 5.5) ist in axialer Richtung im Arbeitsraum (4; 4.2; 4.3a; 4.3b; 4.3c; 4.4; 4.4a; 4.4b) verschiebbar; **gekennzeichnet durch** das folgende Merkmal:
1.4. das den Stör- oder Drosselbereich bildende Element ist als ringförmiges Scheibenelement oder als Ringscheibensegment ausgeführt, dessen voneinander wegweisenden Stirnseiten parallel zueinander angeordnet sind.

2. Hydrodynamische Kupplung (1.5) nach Anspruch 1, **dadurch gekennzeichnet, dass** die zur Trennebene zwischen den Schaufelrädern (25, 35) weisende Stirnseite über wenigstens einen Teil ihrer radialen Erstreckung in radialer Richtung zum mittleren Durchmesser des Arbeitsraumes (8.5) geneigt ausgeführt ist.

3. Hydrodynamische Kupplung (1.5) nach Anspruch 2, **dadurch gekennzeichnet, dass** die zur Trennebene zwischen den Schaufelrädern (2.5; 3.5) weisende Stirnseite in radialer Richtung zum mittleren Durchmesser des Arbeitsraumes (8.5) hin uneben, insbesondere gewölbt ausgeführt ist.

4. Hydrodynamische Kupplung (1; 1.2; 1.3a; 1.4a) nach einem der Ansprüche 1 bis 3, **dadurch gekennzeichnet, dass** das einen Stör- oder Drosselbereich bildende Element (5; 5.2; 5.3a; 5.4a) in Bereich des Außendurchmessers (d_{A4}) des Arbeitsraumes (4.3b; 4.4b) in radialer Richtung betrachtet angeordnet ist und einen Innendurchmesser (d₁₅) aufweist, der größer ist als der innere Durchmesser (d₁₄) des Arbeitraumes (4; 4.2; 4.3a; 4.4a).

5. Hydrodynamische Kupplung (1.3b; 1.4b) nach einem der Ansprüche 1 bis 3, **dadurch gekennzeichnet, dass** das den Stör- oder Drosselbereich bildende Element (5.3b; 5.4b) im Bereich des Innendurchmessers (d₁₄) des Arbeitsraumes (4.3b; 4.4b) angeordnet ist und dass dessen Außendurchmesser (d_{A5}) kleiner als der äußere Durchmesser (d_{A4}) des Arbeitsraumes (4.3b; 4.4b) ist.

6. Hydrodynamische Kupplung (1; 1.2; 1.3a;1.3b; 1,3c: 1.4a; 1.4b) nach einem der Ansprüche 1 bis 5 **gekennzeichnet durch** die folgenden Merkmale: das den Stör- oder Drosselbereich bildende Element (5; 5.3a; 5.3b) ist einem der beiden Schaufelräder (2; 2.3a; 2.3b; 3; 3.3a; 3.3b) zugeordnet, wobei das Schaufelrad einen schaufeltragenden Teil (8; 8.3a; 8.3b) umfasst, der einen in axialer Richtung verschiebbaren, den Strömungskreislauf führenden Wandbereich (7) aufweist und das den Drossel- oder Störbereich bildend Element (5; 5.3a; 5.3b) mit diesem Wandbereich (7) eine bauliche Einheit bildet.

7. Hydrodynamische Kupplung (1; 1.3a; 1.3b) nach Anspruch 6, **dadurch gekennzeichnet, dass** den Drossel- oder Störbereich bildende Element (5; 5.3a; 5.3b) mit dem in axialer Richtung verschiebbaren Wandbereich (7) eine integrale Einheit bildet.

8. Hydrodynamische Kupplung (1; 1.2; 1.3c; 1.4; 1.5) nach einem der Ansprüche 1 bis 5, **dadurch gekennzeichnet, dass** das den Stör- oder Drosselbereich bildende Element (5; 5.2; 5.3c; 5.4; 5.5) als separates Bauteil ausgeführt ist.

9. Hydrodynamische Kupplung (1; 1.2; 1.3c; 1.4; 1.5) nach Anspruch 8, **gekennzeichnet durch** die folgenden Merkmale:
9.1 das den Stör- und Drosselbereich bildende Element (5; 5.2; 5.3c; 5.4; 5.5) ist einem der Schaufelräder (2; 2.2; 2.3c; 2.4; 2.5; 3; 3.2; 3.3c; 3.4; 3.5) zugeordnet;
9.2 das Schaufelrad (2; 2.2; 2.3c; 2.4; 2.5; 3; 3.2; 3.3c; 3.4; 3.5) weist einen schaufeltragenden Teil auf;
9.3 der schaufeltragende Teil (8; 8.2; 8.3c; 8.4; 8.5) erstreckt sich in radialer Richtung betrachtet jeweils nur über einen Teil der Erstreckung der einzelnen Schaufel in dieser Richtung;
9.4 die Schaufeln der Beschaufelung (14) stehen in radialer Richtung im Bereich des Innendurchmessers (d₁₄) oder Außendurchmesser (d_{A8}) des Arbeitsraumes (4; 4.2; 4.3c; 4.4; 4.5) im vom schaufeltragenden Teil (8; 8.2; 8.3c; 8,4; 8.5) freien Bereich mit ihren in radialer Richtung ausgerichteten Endbereichen (13.1) frei über;
9.5 das den Stör- oder Drosselbereich bildende Element (5; 5.2; 5.3c; 5.4; 5.5) weist am Außenumfang oder Innenumfang Führungsschlitze (16) zur Führung an den einander in Umfangsrichtung benachbart angeordneten Schaufeln der Beschaufelung (14) auf.

10. Hydrodynamische Kupplung (1.3a; 1.3c; 1.4; 1.5) nach Anspruch 8, **gekennzeichnet durch** die folgenden Merkmale:
10.1 dass das den Stör- und Drosselbereich bildende Element (5.3a; 5.3c; 5.4; 5.5) ist einem der Schaufelräder (2.3; 2.3a; 3.3a, 2.3c; 3.3c; 2.5; 3.5) zugeordnet;
10.2 das Schaufelrad weist einen schaufeltragenden Teil auf;
10.3 der schaufeltragende Teil (8.3a; 8.3c; 8.4) und die Beschaufelung (14.3a; 14.3c; 14.4) sind in radialer Richtung betrachtet am Innendurchmesser (d₁) oder Außendurchmesser (d_{A}) des jeweiligen Schaufelrades (2.3; 2.3a; 3.3a; 2.3c; 3.3c; 2.5; 3.5) **durch** einen konstanten Durchmesser über die axiale Erstreckung charakterisiert, wobei dieser **durch** den Abtrag eine Schaufelteilsegmentes mit dazugehörigem Teilbereich des schaufeltragenden Teiles gebildet wird.

11. Hydrodynamische Kupplung (1; 1.2; 1.3a; 1.3b; 1.3c; 1.4a; 1.4b) nach einem der Ansprüche 8 bis 10, **dadurch gekennzeichnet, dass** das den Drossel- oder Störbereich bildende Element (3; 3.2a; 3.3a; 3.3b; 3.3c; 3.4; 3.4a; 3.4b), am jeweiligen Schaufelrad (2; 2.2; 2.3b; 2.3c; 2.4; 2.4a'; 2.4b; 3; 3.2a; 3.3a; 3.3b; 3.3c; 3.4; 3.4a; 3.4b) oder einem drehfest mit diesem gekoppelten Element geführt ist.

12. Hydrodynamische Kupplung (1; 1.2; 1.3a; 1.3b; 1.3c; 1.4a; 1.4b) nach einem der Ansprüche 8 bis 10, **dadurch gekennzeichnet, dass** das den Drossel- oder Störbereich bildende Element (5; 5.2; 5.3a; 5.3b; 5.3c; 5.4a; 5.4b; 5.5) an einem mit Relativdrehzahl zum Schaufelrad (2; 2.2; 2.3a; 2.3b; 2.3c; 2.4; 2.4a; 2.4b; 3; 3.2a; 3.3a; 3.3b; 3.3c; 3.4; 3.4a; 3.4b) rotierenden Element oder einem drehfest mit diesem gekoppelten Element geführt ist.

13. Hydrodynamische Kupplung (1; 1.2; 1.3a; 1.3b; 1.3c; 1.4a; 1.4b) nach einem der Ansprüche 8 bis 10, **dadurch gekennzeichnet, dass** das den Drossel- oder Störbereich bildende Element (5; 5.2; 5.3a; 5.3b; 5.3c; 5.4a; 5.4b; 5.5) an einem ortsfesten Bauteil oder Gehäuse (21; 24; 25) oder einem drehfest mit einem Schaufelrad (2; 2.2; 2.3a; 2.3b; 2.3c; 2.4; 2.4a; 2.4b; 3; 3.2a; 3.3a; 3.3b; 3.3c; 3.4; 3.4a; 3.4b) gekoppelten Element geführt ist.

14. Hydrodynamische Kupplung (1; 1.2; 1.3b; 1.4b; 1.5; 1.6) nach einem der Ansprüche 1 bis 13, **dadurch gekennzeichnet, dass** das den Drossel- oder Störbereich bildende Element (5; 5.2; 5.3b; 5.4b; 5-5; 5.6) dem Primärschaufelrad (2; 2.2; 2.3b; 2.4b; 2.5; 2.6) zugeordnet ist.

15. Hydrodynamische Kupplung (1.3a; 1.4a) nach einem der Ansprüche 1 bis 14, **dadurch gekennzeichnet, dass** das den Drossel- oder Störbereich bildende Element (5.3a; 5.4a) dem Sekundärschaufelrad (3.3a; 3.4) zugeordnet ist.

## Claims

1. A hydrodynamic clutch (1; 1.2; 1.3a; 1.3b; 1.3c; 1.4a; 1.4b);
1.1 having a primary blade wheel (2; 2.2; 2.3a; 2.3b; 2.3c; 2.4; 2.4a; 2.4b) and a secondary blade wheel (3; 3.2a; 3.3a; 3.3b; 3.3c; 3.4; 3.4a; 3.4b), which form a working chamber (4; 4.2; 4.3a; 4.3b; 4.3c; 4.4; 4.4a; 4.4b) with one another;
1.2 having means for influencing the transmission behavior of the hydrodynamic clutch (1; 1.2; 1.3a; 1.3b; 1.3c; 1.4a; 1.4b), in particular for influencing the flow circulation in the working chamber (4; 4.2; 4.3a; 4.3b; 4.3c; 4.4; 4.4a; 4.4b), comprising at least one element (5; 5.2; 5.3a; 5.3b; 5.3c; 5.4a; 5.4b; 5.5) forming an interference or throttle area, which extends at least partially into the working chamber (4; 4.2; 4.3a; 4.3b; 4.3c; 4.4; 4.4a; 4.4b);
1.3 the element (5; 5.2; 5.3a; 5.3b; 5.3c; 5.4a; 5.4b; 5.5) forming the interference or throttle area being displaceable in the axial direction in the working chamber (4; 4.2; 4.3a; 4.3b; 4.3c; 4.4; 4.4a; 4.4b); **characterized by** the following feature:
1.4 the element forming the interference or throttle area is implemented as an annular disk element or as a ring disk element, whose front sides pointing away from one another are situated parallel to one another.

2. The hydrodynamic clutch (1.5) according to Claim 1, **characterized in that** front side pointing toward the partition plane between the blade wheels (25, 35) is implemented as inclined in the radial direction toward the central diameter of the working chamber (8.5) over at least a part of its radial extension.

3. The hydrodynamic clutch (1.5) according to Claim 2, **characterized in that** the front side pointing toward the partition plane between the blade wheels (2.5; 3.5) is implemented as uneven, in particular bulging, in the radial direction toward the central diameter of the working chamber (8.5).

4. The hydrodynamic clutch (1; 1.2; 1.3a; 1.4a) according to one of Claims 1 through 3, **characterized in that** the element (5; 5.2; 5.3a; 5.4a) which forms an interference or throttle area is situated in the area of the external diameter (d_{A4}) of the working chamber (4.3b; 4.4b) viewed in the radial direction and has an internal diameter (d₁₅) which is greater than the internal diameter (d₁₄) of the working chamber (4; 4.2; 4.3a; 4.4a).

5. The hydrodynamic clutch (1.3b; 1.4b) according to one of Claims 1 through 3, **characterized in that** the element (5.3b; 5.4b) forming the interference or throttle area is situated in the area of the internal diameter (d₁₄) of the working chamber (4.3b; 4.4b), and the external diameter (d_{A5}) thereof is less than the external diameter (d_{A4}) of the working chamber (4.3b; 4.4b).

6. The hydrodynamic clutch (1; 1.2; 1.3a; 1.3b; 1.3c; 1.4a; 1.4b) according to one of Claims 1 through 5, **characterized by** the following features:
the element (5; 5.3a; 5.3b) forming the interference or throttle area is associated with one of the two blade wheels (2; 2.3a; 2.3b; 3; 3.3a; 3.3b), the blade wheel comprising a blade-carrying part (8; 8.3a; 8.3b) which has a wall area (7), which is displaceable in the axial direction and guides the flow circulation, and the element (5; 5.3a; 5.3b) forming the interference or throttle area forms a modular unit with this wall area (7).

7. The hydrodynamic clutch (1; 1.3a; 1.3b) according to Claim 6, **characterized in that** the element (5; 5.3a; 5.3b) forming the interference or throttle area forms an integral unit with the wall area (7) displaceable in the axial direction.

8. The hydrodynamic clutch (1; 1.2; 1.3c; 1.4; 1.5) according to one of Claims 1 through 5, **characterized in that** the element (5; 5.2; 5.3c; 5.4; 5.5) forming the interference or throttle area is implemented as a separate component.

9. The hydrodynamic clutch (1; 1.2; 1.3c; 1.4; 1.5) according to Claim 8,
**characterized by** the following features:
9.1 the element (5; 5.2; 5.3c; 5.4; 5.5) forming the interference and throttle area is associated with one of the blade wheels (2; 2.2; 2.3c; 2.4; 2.5; 3; 3.2; 3.3c; 3.4; 3.5);
9.2 the blade wheel (2; 2.2; 2.3c; 2.4; 2.5; 3; 3.2; 3.3c; 3.4; 3.5) has a blade-carrying part;
9.3 the blade-carrying part (8; 8.2; 8.3c; 8.4; 8.5) extends, viewed in the radial direction, over only a part of the extension of the individual blades in this direction in each case;
9.4 the blades of the blading (14) protrude freely in the radial direction into the area of the internal diameter (d₁₄) or external diameter (d_{A8}) of the working chamber (4; 4.2; 4.3c; 4.4; 4.5) in the area free of the blade-carrying part (8; 8.2; 8.3c; 8.4; 8.5) using their end areas (13.1) oriented in the radial direction;
9.5 the element (5; 5.2; 5.3c; 5.4; 5.5) forming the interference and throttle area has guide slots (16) on the external circumference or internal circumference for guiding the blades of the blading (14), which are situated adjacent to one another in the peripheral direction.

10. The hydrodynamic clutch (1.3a; 1.3c; 1.4; 1.5) according to Claim 8,
**characterized by** the following features:
10.1 the element (5.3a; 5.3c; 5.4; 5.5) forming the interference and throttle area is associated with one of the blade wheels (2.3; 2.3a; 3.3a, 2.3c; 3.3c; 2.5; 3.5);
10.2 the blade wheel has a blade-carrying part;
10.3 the blade-carrying part (8.3a; 8.3c; 8.4) and the blading (14.3a; 14.3c; 14.4) are **characterized**, viewed in the radial direction, by a constant diameter over the axial extension on the internal diameter (d₁) or external diameter (d_{A}) of the particular blade wheel (2.3; 2.3a; 3.3a, 2.3c; 3.3c; 2.5; 3.5), this being formed by the removal of a blade part segment having associated partial area of the blade-carrying part.

11. The hydrodynamic clutch (1; 1.2; 1.3a; 1.3b; 1.3c; 1.4a; 1.4b) according to one of Claims 8 through 10, **characterized in that** the element (3; 3.2a; 3.3a; 3.3b; 3.3c; 3.4; 3.4a; 3.4b) forming the throttle or interference area is guided on the particular blade wheel (2; 2.2; 2.3b; 2.3c; 2.4; 2.4a'; 2.4b; 3; 3.2a; 3.3a; 3.3b; 3.3c; 3.4; 3.4a; 3.4b) or an element coupled rotationally fixed thereto.

12. The hydrodynamic clutch (1; 1.2; 1.3a; 1.3b; 1.3c; 1.4a; 1.4b) according to one of Claims 8 through 10, **characterized in that** the element (5; 5.2; 5.3a; 5.3b; 5.3c; 5.4a; 5.4b; 5.5) forming the throttle or interference area is guided on an element rotating with relative speed to the blade wheel (2; 2.2; 2.3a; 2.3b; 2.3c; 2.4; 2.4a; 2.4b; 3; 3.2a; 3.3a; 3.3b; 3.3c; 3.4; 3.4a; 3.4b) or an element coupled rotationally fixed thereto.

13. The hydrodynamic clutch (1; 1.2; 1.3a; 1.3b; 1.3c; 1.4a; 1.4b) according to one of Claims 8 through 10, **characterized in that** the element (5; 5.2; 5.3a; 5.3b; 5.3c; 5.4a; 5.4b; 5.5) forming the throttle or interference area is guided on a fixed component or housing (21; 24; 25) or an element coupled rotationally fixed to a blade wheel (2; 2.2; 2.3a; 2.3b; 2.3c; 2.4; 2.4a; 2.4b; 3; 3.2a; 3.3a; 3.3b; 3.3c; 3.4; 3.4a; 3.4b).

14. The hydrodynamic clutch (1; 1.2; 1.3b; 1.4b; 1.5; 1.6) according to one of Claims 1 through 13, **characterized in that** the element (5; 5.2; 5.3b; 5.4b; 5.5; 5.6) forming the throttle or interference area is associated with the primary blade wheel (2; 2.2; 2.3b; 2.4b; 2.5; 2.6).

15. The hydrodynamic clutch (1.3a; 1.4a) according to one of Claims 1 through 14, **characterized in that** the element (5.3a; 5.4a) forming the throttle or interference area is associated with the secondary blade wheel (3.3a; 3.4).

## Revendications

1. Coupleur hydrodynamique (1 ; 1.2 ; 1.3a ; 1.3b ; 1.3c ; 1.4a ; 1.4b) ;
1.1 comportant une roue à ailettes primaire (2 ; 2.2 ; 2.3a ; 2.3b ; 2.3c ; 2.4 ; 2.4a ; 2.4b) et une roue à ailettes secondaire (3 ; 3.2a ; 3.3a ; 3.3b ; 3.3c ; 3.4 ; 3.4a ; 3.4b), qui forment ensemble un espace de travail (4 ; 4.2 ; 4.3a ; 4.3b ; 4.3c ; 4.4 ; 4.4a ; 4.4b) ;
1.2 des moyens destinés à influencer le comportement de transmission dudit coupleur hydrodynamique (1 ; 1.2 ; 1.3a ; 1.3b ; 1.3c ; 1.4a ; 1.4b) en particulier à influencer le circuit d'écoulement dans ledit espace de travail (4 ; 4.2 ; 4.3a ; 4.3b ; 4.3c ; 4.4 ; 4.4a ; 4.4b), comportant au moins un élément (5 ; 5.2 ; 5.3a ; 5.3b ; 5.3c ; 5.4a ; 5.4b ; 5.5) formant une zone de brouillage ou d'étranglement, lequel s'étend au moins partiellement dans ledit espace de travail (4 ; 4.2 ; 4.3a ; 4.3b ; 4.3c ; 4.4 ; 4.4a ; 4.4b) ;
1.3 ledit élément (5 ; 5.2 ; 5.3a ; 5.3b ; 5.3c ; 5.4a ; 5.4b ; 5.5) format une zone de brouillage ou d'étranglement est coulissant en sens axial dans ledit espace de travail (4 ; 4.2 ; 4.3a ; 4.3b ; 4.3c ; 4.4 ; 4.4a ; 4.4b) ; **caractérisé par** la caractéristique suivante :
1.4 ledit élément formant une zone de brouillage ou d'étranglement est constitué comme élément discoïde ou comme segment de disque annulaire, dont les fronts détournés l'un de l'autre sont disposés parallèlement l'un par rapport à l'autre.

2. Coupleur hydrodynamique (1.5) selon la revendication 1, **caractérisé en ce**ci que le front orienté vers le plan de séparation entre lesdites roues à ailettes (25, 35) est, à travers au moins une partie de son extension radiale, réalisé, en sens radial, de manière inclinée en direction du diamètre médian dudit espace de travail (8.5).

3. Coupleur hydrodynamique (1.5) selon la revendication 2, **caractérisé en ce**ci que le front orienté vers le plan de séparation entre lesdites roues à ailettes (2.5; 3.5) est réalisé, en sens radial, de manière inégale en direction du diamètre médian dudit espace de travail (8.5), en particulier de manière bombée.

4. Coupleur hydrodynamique (1 ; 1.2; 1.3a; 1.4a) selon l'une des revendications 1 à 3, **caractérisé en ce**ci que ledit élément (5 ; 5.2 ; 5.3a ; 5.4a) formant une zone de brouillage ou d'étranglement est disposé au niveau du diamètre extérieur (d_{A4}) dudit espace de travail (4.3b ; 4.4b), vu en direction radiale, et présente un diamètre intérieur (d₁₅), qui est supérieur au diamètre intérieur (d₁₄) dudit espace de travail (4 ; 4.2 ; 4.3a ; 4.4a).

5. Coupleur hydrodynamique (1.3b ; 1.4b) selon l'une des revendications 1 à 3, **caractérisé en ce**ci que ledit élément (5.3b ; 5.4b) formant une zone de brouillage ou d'étranglement est disposé au niveau du diamètre intérieur (d₁₄) dudit espace de travail (4.3b ; 4.4b) et que son diamètre extérieur (d_{A5}) est inférieur au diamètre extérieur (d_{A4}) dudit espace de travail (4.3b ; 4.4b).

6. Coupleur hydrodynamique (1 ; 1.2; 1.3a; 1.3b; 1.3c; 1.4a; 1.4b) selon l'une des revendications 1 à 5, **caractérisé par** les caractéristiques suivantes :
l'élément (5 ; 5.3a ; 5.3b) formant la zone de brouillage ou d'étranglement est attribué à l'une desdites deux roues à ailettes (2 ; 2.3a ; 2.3b ; 3 ; 3.3a ; 3.3b), ladite roue à ailettes comportant une partie porte-ailette (8 ; 8.3a ; 8.3b), qui présente une partie paroi (7) coulissante en sens axial, intégrant le circuit d'écoulement, et ledit élément (5 ; 5.3a ; 5.3b) formant ladite zone de brouillage ou d'étranglement constitue un ensemble structural avec ladite partie paroi (7).

7. Coupleur hydrodynamique (1 ; 1.3a; 1.3b) selon la revendication 6,
**caractérisé en ce**ci que ledit élément (5 ; 5.3a ; 5.3b) formant la zone de brouillage ou d'étranglement constitue un ensemble structural avec ladite partie paroi (7), coulissante en sens axial.

8. Coupleur hydrodynamique (1 ; 1.2 ; 1.3c; 1.4 ; 1.5) selon l'une des revendications 1 à 5, **caractérisé en ce**ci que ledit élément (5 ; 5.2 ; 5.3c ; 5.4 ; 5.5) formant la zone de brouillage ou d'étranglement, est réalisé comme pièce détachée.

9. Coupleur hydrodynamique (1 ; 1.2 ; 1.3c; 1.4 ; 1.5) selon la revendication 8, **caractérisé par** les caractéristiques suivantes :
9.1 ledit élément (5 ; 5.2 ; 5.3c ; 5.4 ; 5.5) formant ladite zone de brouillage et d'étranglement est attribué à l'une desdites roues à ailettes (2 ; 2.2 ; 2.3c ; 2.4 ; 2.5 ; 3 ; 3.2 ; 3.3c ; 3.4 ; 3.5) ;
9.2 ladite roue à ailettes (2 ; 2.2 ; 2.3c ; 2.4 ; 2.5 ; 3 ; 3.2 ; 3.3c ; 3.4 ; 3.5) présente une partie porte-ailette ;
9.3 ladite partie porte-ailette (8 ; 8.2 ; 8.3c ; 8.4 ; 8.5) s'étend, vu en sens axial, seulement à travers une partie de l'extension de l'ailette individuelle dans cette direction ;
9.4 les ailettes de l'ailettage (14) font, en sens radial, saillie libre avec leurs extrémités (13.1) orientées en sens radial au niveau du diamètre intérieur (d₁₄) ou du diamètre extérieur (d_{A8}) dudit espace de travail (4 ; 4.2 ; 4.3c ; 4.4 ; 4.5) dans la zone exempte de la partie porte-ailette (8 ; 8.2 ; 8.3c ; 8.4 ; 8.5) ;
9.5 ledit élément (5 ; 5.2 ; 5.3c ; 5.4 ; 5.5) formant la zone de brouillage ou d'étranglement présente sur la circonférence extérieure ou intérieure des fentes de guidage (16) destinées à guider le long des ailettes de l'ailettage (14), disposées de manière adjacente en sens de la circonférence.

10. Coupleur hydrodynamique (1.3a ; 1.3c ; 1.4 ; 1.5) selon la revendication 8,
**caractérisé par** les caractéristiques suivantes :
10.1 ledit élément (5.3a ; 5.3c ; 5.4 ; 5.5) formant ladite zone de brouillage et d'étranglement est attribué à l'une desdites roues à ailettes (2.3 ; 2.3a; 3.3a ; 2.3c ; 3.3c ; 2.5 ; 3.5) ;
10.2 ladite roue à ailettes présente une partie porte-ailette ;
10.3 ladite partie porte-ailette (8.3a ; 8.3c ; 8.4) et ledit ailettage (14.3a ; 14.3c ; 14.4) sont, vus en sens radial, **caractérisés**, au niveau du diamètre intérieur (d₁) ou du diamètre extérieur (d_{A}) de la roue à ailettes concernée (2.3 ; 2.3a ; 3.3a ; 2.3c ; 3.3c ; 2.5 ; 3.5), par un diamètre constant sur toute son extension axiale, celui-ci étant formé par l'enlèvement d'un segment partiel d'ailette avec la partie associée de la partie porte-ailette.

11. Coupleur hydrodynamique (1 ; 1.2 ; 1.3a ; 1.3b ; 1.3c ; 1.4a ; 1.4b) selon l'une des revendications 8 à 10, **caractérisé en ce**ci que ledit élément (3 ; 3.2a ; 3.3a ; 3.3b ; 3.3c; 3.4 ; 3.4a ; 3.4b) formant ladite zone d'étranglement ou de brouillage est guidé sur la roue à ailette correspondante (2 ; 2.2 ; 2.3b ; 2.3c ; 2.4 ; 2.4a' ; 2.4b ; 3 ; 3.2a ; 3.3a ; 3.3b ; 3.3c ; 3.4 ; 3.4a ; 3.4b) ou sur un élément couplé à celle-ci de manière non-rotative.

12. Coupleur hydrodynamique (1 ; 1.2 ; 1.3a ; 1.3b ; 1.3c ; 1.4a ; 1.4b) selon l'une des revendications 8 à 10, **caractérisé en ce**ci que ledit élément (5 ; 5.2 ; 5.3a ; 5.3b ; 5.3c ; 5.4a ; 5.4b ; 5.5) format ladite zone d'étranglement ou de brouillage est guidé sur un élément rotant à la vitesse de rotation relative par rapport à ladite roue à ailettes (2 ; 2.2 ; 2.3a ; 2.3b ; 2.3c ; 2.4 ; 2.4a ; 2.4b ; 3 ; 3.2a ; 3.3a ; 3.3b ; 3.3c ; 3.4 ; 3.4a ; 3.4b) ou sur un élément couplé à celle-ci de manière non-rotative.

13. Coupleur hydrodynamique (1 ; 1.2; 1.3a; 1.3b; 1.3c; 1.4a; 1.4b) selon l'une des revendications 8 à 10, **caractérisé en ce**ci que ledit élément (5 ; 5.2 ; 5.3a ; 5.3b ; 5.3c ; 5.4a ; 5.4b ; 5.5) format ladite zone d'étranglement ou de brouillage est guidé sur un élément fixe ou sur un carter (21 ; 24 ; 25) ou sur un élément couplé de manière non-rotative à une roue à ailettes (2 ; 2.2 ; 2.3a ; 2.3b ; 2.3c ; 2.4; 2.4a ; 2.4b ; 3 ; 3.2a ; 3.3a ; 3.3b ; 3.3c ; 3.4 ; 3.4a ; 3.4b).

14. Coupleur hydrodynamique (1 ; 1.2 ; 1.3b ; 1.4 ; 1.5 ; 1.6) selon l'une des revendications 1 à 13, **caractérisé en ce**ci que ledit élément (5 ; 5.2 ; 5.3b ; 5.4b ; 5.5 ; 5.6) format ladite zone d'étranglement ou de brouillage est attribué à ladite roue à ailettes primaire (2 ; 2.2 ; 2.3b ; 2.4b ; 2.5 ; 2.6).

15. Coupleur hydrodynamique (1.3a ; 1.4a) selon l'une des revendications 1 à 14, **caractérisé en ce**ci que ledit élément (5.3a ; 5.4a) format ladite zone d'étranglement ou de brouillage est attribué à ladite roue à ailettes secondaire (3.3a ; 3.4).
